# EUROPEAN PATENT SPECIFICATION

(11) **EP 3 058 628 B1**
(45) Date of publication and mention of the grant of the patent: **29.09.2021**
(21) Application number: 14853982.8
(22) Date of filing: 09.10.2014
(51) Int. Cl.: H01S 3/30, H01S 3/067, H01S 3/08, H01S 3/094, H01S 3/0941

(54) **METHOD AND APPARATUS FOR GENERATING HIGH POWER LASER LIGHT**
VERFAHREN UND VORRICHTUNG ZUR ERZEUGUNG VON HOCHLEISTUNGSLASERLICHT
PROCÉDÉ ET APPAREIL POUR PRODUIRE UNE LUMIÈRE LASER À PUISSANCE ÉLEVÉE

(30) Priority: 14.10.2013 US 201361890479 P
(43) Date of publication of application: 24.08.2016
(73) Proprietor: Ram Photonics, LLC, San Diego, California 92121-1744 (US)
(72) Inventor: MARCIANTE, John R., Webster, New York 14580 (US)
(74) Representative: Diehl & Partner
(86) International application number: PCT/US2014/059855
(87) International publication number: WO 2015/057482

(56) References cited:
- US-A1- 2001 010 696
- US-A1- 2003 063 629
- US-A1- 2003 210 725
- US-A1- 2003 210 725
- US-A1- 2007 237 453
- US-A1- 2009 225 793
- US-A1- 2009 225 793
- US-A1- 2011 149 382
- US-A1- 2012 230 352
- US-A1- 2012 268 808
- US-B1- 6 212 310
- US-B1- 6 324 326
- US-B1- 6 434 295
- None

## Description

The present invention relates to optical systems. More particularly, the present invention relates to a laser source utilizing multimode fiber gain regions.

### BACKGROUND ART

US 2003/0210725 A1 discloses an optical device including a broad area laser for lasing at a first wavelength, a multimode active-doped tapered waveguide laser, and a multimode passive planar mode transformer coupling and tapering from the broad area laser to the multimode active-doped tapered waveguide laser.

US 2009/0225793 A1 discloses a multimode-fiber Raman laser including a pump source having a pump wavelength, and an oscillator resonant at an emission wavelength greater than the pump wavelength. The oscillator includes an input coupler optically aligned with the pump source, and multimode optical fiber coupled to the input coupler.

### SUMMARY OF THE INVENTION

The present invention provides the multimode fiber Raman laser according to claim 1. In a particular embodiment, adiabatic tapering is used to increase optical efficiency.

According to an embodiment of the present invention, the multimode fiber Raman laser includes a pump delivery fiber having a first core diameter and a first etendue and a multimode Raman resonator fiber coupled to the pump delivery fiber. The multimode Raman resonator fiber has a second core diameter less than the first core diameter and a second etendue greater than or equal to the first etendue.

According to the present invention, the laser includes a pump source having an emission area and a first etendue and a multimode Raman resonator fiber coupled to the pump source. The multimode Raman resonator fiber has a second etendue greater than or equal to the first etendue.

According to another embodiment of the present invention, the laser includes a pump source (for example, a diode laser) having an asymmetric beam profile and a multimode Raman resonator fiber optically coupled to the diode laser pump source. The multimode Raman resonator fiber has an asymmetric core.

According to yet another embodiment of the present invention, the fiber Raman laser includes an optical pump source and a fiber resonator comprising a high reflectivity FBG, a multimode fiber gain region operable to support a predetermined number of modes, a pump reflector FBG, a mode converter operable to support a reduced number of modes less than or equal to the predetermined number of modes, and an output coupler FBG.

According to a specific embodiment of the present invention, the fiber Raman laser includes an optical pump source and a fiber resonator coupled to the optical pump source and comprising a high reflectivity FBG, a multimode fiber gain region, a pump reflector FBG, a mode converter operable to support a single mode, and a single mode output coupler FBG.

According to another specific embodiment of the present invention, the fiber Raman laser includes a diode laser pump source having an asymmetric beam profile, a pump delivery fiber coupled to the diode laser pump and having a first core diameter and a first etendue, and a Raman resonator fiber having an asymmetric core and coupled to the pump delivery fiber. The pump deliver fiber can have an asymmetric core.

The multimode Raman resonator fiber has a second core diameter less than the first core diameter and a second etendue greater than or equal to the first etendue. The multimode Raman resonator can also include a high reflectivity FBG, a multimode fiber gain region operable to support a predetermined number of modes, a pump reflector FBG, a mode converter operable to support a single mode, and an output coupler FBG.

Numerous benefits are achieved by way of the present invention over conventional techniques. For example, embodiments of the present invention provide methods and systems that increase the pump intensity in the fiber gain region. Other embodiments provide a single-spatial-mode output while utilizing multimode fiber gain regions. These and other embodiments of the invention along with many of its advantages and features are described in more detail in conjunction with the text below and attached figures.

### BRIEF DESCRIPTION OF THE DRAWINGS

FIG. 1 is a simplified schematic diagram of a laser amplifier according to an example useful for understanding the present invention.
FIG. 2 is a simplified schematic diagram of a laser according to another example useful for understanding the present invention.
FIG. 3 is a simplified schematic diagram of a laser with an integrated mode converter according to an embodiment of the present invention.
FIG. 4 is a simplified schematic diagram of a laser with an integrated mode converter according to another embodiment of the present invention.
FIG. 5 is a simplified schematic diagram of a fiber coupling geometry according to an embodiment of the present invention.

### DETAILED DESCRIPTION OF SPECIFIC EMBODIMENTS

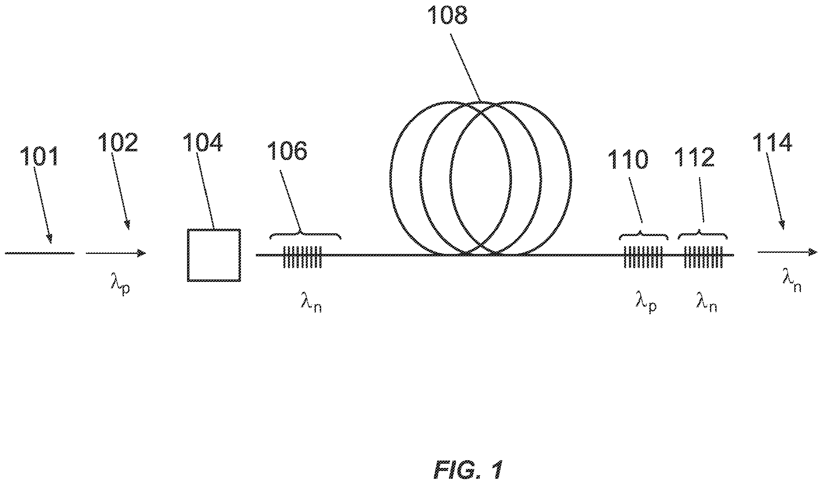

FIG. 1 is a simplified schematic diagram of a laser according to an example useful for understanding the present invention. As illustrated in FIG. 1, pump light 102, typically from a laser source and characterized by a pump wavelength (λₚ) is delivered by pump delivery fiber 101 and launched into multimode fiber (MMF) 108 using an optical coupler 104. The pump light 102 can be provided by a high power, multimode semiconductor laser, a semiconductor laser array, or the like. Thus, typically, the pump laser is not a spatially coherent source and can have a spectral linewidth greater than a predetermined value. In an embodiment, the pump delivery fiber 101 provides the pump light through an emission aperture, which can correspond to the core diameter of the pump delivery fiber.

The wavelength of the pump light λₚ will depend on the characteristics of the MMF in order to achieve a desired Raman gain. As an example, if the MMF is a silica fiber, the pump wavelength can be in a range between 600 nm to 2 µm. In a particular embodiment, 800 nm < λₚ < 980 nm. As another example, the MMF can be a germanosilicate fiber, which are characterized by high Raman gain, which can utilize pump wavelengths ranging from 400 nm to 2.5 µm.

In some embodiments, free space coupling is used, making the optical coupler 104 a lens system. In these embodiments, the numerical aperture (NA) of the fiber can be matched to the NA of the pump light source, increasing coupling efficiency, although this is not required by the present invention. In other embodiments, the NA of the fiber can be greater than the NA of the pump light source as described herein.

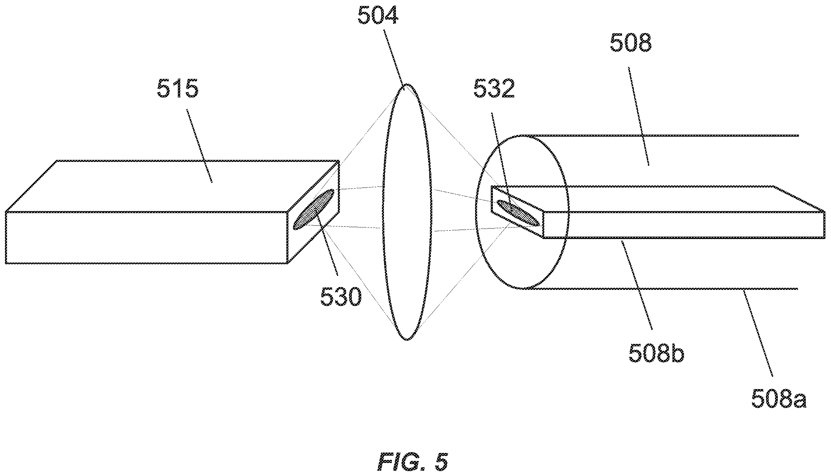

The MMF 108 can have differing characteristics depending on the application. As an example, the MMF can be a round fiber with a core greater than or equal to 50 µm in diameter and with a NA of 0.22, but this is not required by the present invention. As described in relation to FIG. 5, fibers with oval or rectangular cores, double-clad fibers, and the like are included within the scope of the present invention. One of ordinary skill in the art would recognize many variations, modifications, and alternatives.

As illustrated in FIG. 1, a Stokes high reflectivity (HR) fiber Bragg grating (FBG) 106 is used on the input side of the MMF and a Stokes output coupler (OC) FBG 112 is used on the output side of the MMF. The Stokes HR FBG 106 and the Stokes OC FBG 112 are reflective at the Stokes wavelength λₙ), i.e., the Raman downshifted wavelength, and form the resonant cavity for generation of the Stokes output 114 at the Stokes wavelength (λₙ). The Stokes HR FBG 106 and the Stokes OC FBG 112 are spectrally and modally narrow-band in some implementations.

To reflect the pump light at the pump wavelength λₚ back into the MMF 108 for higher efficiency through double passing of the pump light through the MMF, a pump high reflectivity (HR) FBG 110 is integrated into the fiber. The HR FBG 110 is spectrally and modally broad-band in some implementations and is characterized by high reflectivity at the pump wavelength λₚ. Stokes output 114, downshifted by about 14 THz with respect to the input light, is produced by this laser as shown in FIG. 1 (e.g., 837 nm output for an input at 808 nm). As described herein, the beam quality of the Stokes output 114 is better than the beam quality of the pump light 102. Although the Stokes output 114 may not be single mode, it will have a reduced number of modes than the multimode input associated with the pump light 102. Accordingly, the beam quality improvement provided by the present invention enables the system illustrated in FIG. 1 to be characterized by the Stokes output 114 having a smaller etendue than the pump light 102.

The inventors have determined that in some implementations, the conversion efficiency of the system illustrated in FIG. 1 can be impacted by the core size of the MMF. As an example, if the core size is increased to match the diode pump, this can result in low intensity in the MMF and result in long fiber lengths. Since the fiber has propagation loss and the nonlinear Raman process depends on the optical intensity, this can adversely impact device performance.

Moreover, the inventors have determined that narrow-band multimode FBGs can be difficult to fabricate since there are typically no in-situ monitoring techniques.

Referring once again to FIG. 1, an embodiment of the present invention utilizes a configuration in which the core diameter of the MMF 108 is decreased while increasing the NA, resulting in the same etendue (i.e., the product of the core diameter and the NA of the fiber) for the laser when the product of the core diameter and the NA is fixed. As an example, the core diameter of the MMF can be 25 µm and the NA can be 0.44. This design enables higher intensity and better Raman conversion in the MMF and higher efficiency for laser operation. In other words, embodiments of the present invention decrease the output beam size by allowing the NA of the MMF to increase while containing the same optical power.

According to embodiments of the present invention, the Raman resonator has an etendue that is greater than or equal to the etendue of the pump light, for example, the etendue of a delivery fiber delivering the pump light to optical coupler 104. These embodiments match the etendue or increase the etendue as light is coupled from the delivery fiber to the MMF. As an example, if the pump light is delivered using a 100 µm core delivery fiber, the MMF can have a 50 µm core diameter (i.e., the MMF will have twice the NA of the delivery fiber). The pump intensity in the MMF increases by a factor of four, resulting in higher Raman efficiency. Other embodiments do not match the etendue of the delivery fiber and the MMF. As an example, if the core diameter of the MMF decreases by a factor of two compared to the delivery fiber, but the NA of the MMF only increases by a factor of 1.5, power in the MMF will be reduced because of the mismatch in etendue, but the significant intensity enhancement in the core of the MMF will increase the Raman efficiency in this example in which the etendue of the MMF is greater than the etendue of the delivery fiber, but not equal, as a result of the increase in pump intensity in the MMF and the corresponding Raman efficiency. In a particular embodiment, the pump delivery fiber is a 100 µm core, 0.22 NA fiber and the MMF is a 50 µm core, 0.29 NA fiber.

High-NA fibers can be polymer clad silica, silica PCF, multi-component silicate/phosphate, germanosilicate, or the like. The pump light can be launched into the MMF using either free space propagation or utilizing a fiber coupler.

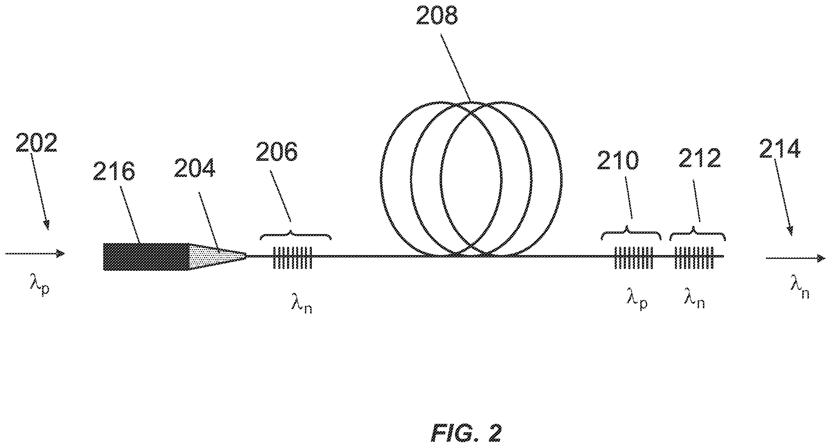

FIG. 2 is a simplified schematic diagram of a laser according to another example useful for understanding the present invention. As illustrated in FIG. 2, the pump light 202 is launched into the MMF 208 using a pump delivery fiber 216 and an adiabatic tapered fiber 204 as the optical coupler. In a manner similar to FIG. 1, the example illustrated in FIG. 2 utilizes a Stokes high reflectivity (HR) fiber Bragg grating (FBG) 206 on the input side of the MMF 208 and a Stokes output coupler (OC) FBG 212 on the output side of the MMF to form a Stokes resonator. To reflect the pump light back into the MMF 208 for a second pass, a high reflectivity (HR) FBG 210 is integrated into the fiber in some implementations. The description provided in relation to FIG. 1 is applicable to FIG. 2 as appropriate. Stokes output 214 is produced by this laser as shown in FIG. 1.

As illustrated in FIG. 2, the all-fiber coupler utilized as the optical coupler launches the pump light 202 into the MMF using the adiabatic taper fiber 204. Example dimensions for elements in the system illustrated in FIG. 2 are a pump delivery fiber 216 with a core diameter of 50 µm and a NA = 0.22, a MMF 208 with a core diameter of 25 µm and a NA = 0.44, and an adiabatic taper fiber that tapers from 50 µm to 25 µm, with a NA = 0.44. Of course, these particular dimensions and values are only exemplary and are not intended to limit embodiments of the present invention.

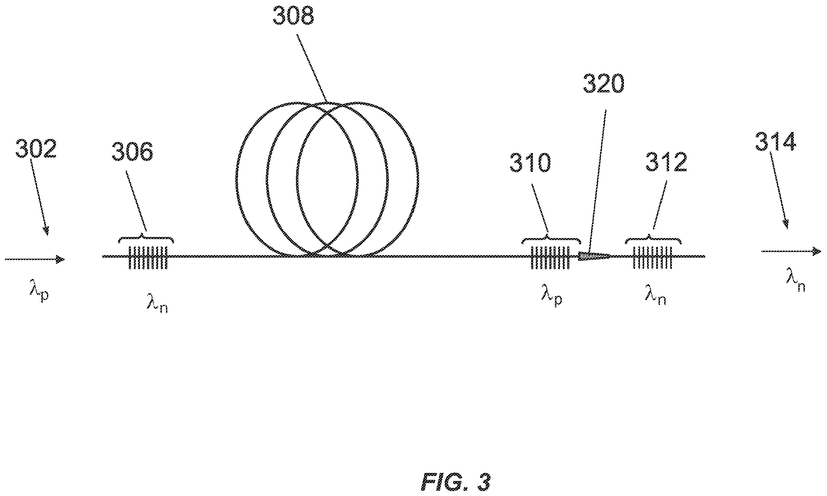

FIG. 3 is a simplified schematic diagram of a laser with an integrated mode converter according to an embodiment of the present invention. The laser includes some elements from FIGS. 1 and 2 and the description provided in relation to those figures is applicable as appropriate. Referring to FIG. 3, the laser includes a MMF 308, Stokes HR FBG 306, Stokes OC FBG 312, and pump HR FBG 310. Input pump light 302 and Stokes laser output 314 are illustrated. Between the pump HR FBG 310 and the Stokes OC FBG 312, an adiabatic tapered mode converter 320 is provided. The presence of the pump HR FBG 310 and the short length of the fiber downstream of the pump HR FBG 310 results in the Raman gain not being present in substantial quantities in either the adiabatic tapered mode converter 320 or the Stokes OC FBG 312. Thus, in the embodiment illustrated in FIG. 3, the adiabatic tapered mode converter 320 and the Stokes OC FBG 312 comprise an unpumped region with little to no Raman gain.

In the example illustrated in FIG. 1, the FBGs are in multimode fiber. In FIG. 3, the Stokes light is substantially single mode at the output side of the MMF 308. Accordingly, an adiabatic down-taper to ~SMF FBG can be utilized. By providing this adiabatic down-tapering, fabrication of the Stokes HR FBG 306 and the pump HR FBG 310 is greatly simplified since these elements can be broad-band and easier to fabricate than narrow-band FBGs, which are difficult to fabricate as a result of the lack of in-situ measurement techniques due to mode scrambling. The Stokes OC FBG 312 can be fabricated in a single mode or a few mode fiber (i.e., substantially less multimode than the MMF 308) that supports a reduced number of modes in comparison to the MMF 308. As a result, the output from the Stokes OC FBG 312 can be single mode in some implementations. In some embodiments, the Stokes OC FBG 312 is stretched to allow for spectral tuning for mode/gain optimization. This approach can be particularly useful in large-core MMF embodiments since the Stokes light reflected from the Stokes OC FBG 312 is single mode or has a reduced number of modes, thereby improving the beam quality of the Stokes laser output.

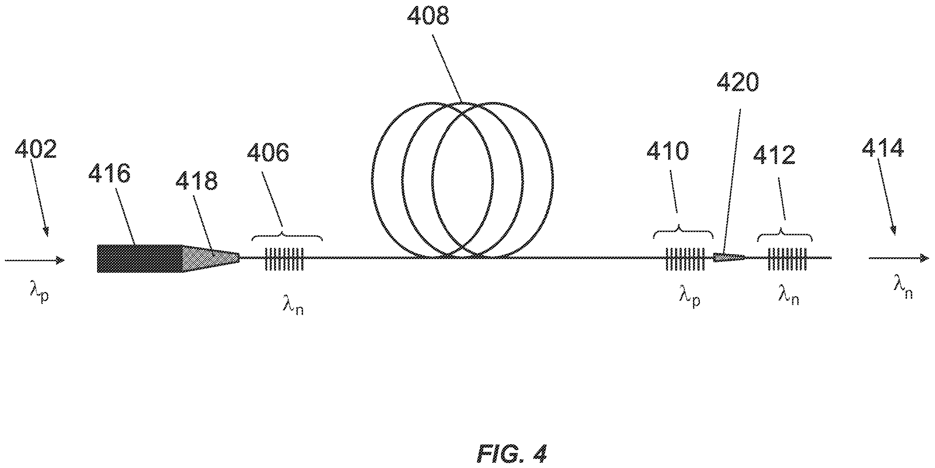

FIG. 4 is a simplified schematic diagram of a laser with an integrated mode converter according to another embodiment of the present invention. The laser illustrated in FIG. 4 combines elements from FIG. 2 and FIG. 3, namely, a pump delivery fiber 416 and an adiabatic taper fiber 418 as well as adiabatic tapered mode converter 420. Discussion related to elements illustrated in FIGS. 2 and 3 are applicable to FIG. 4 as appropriate.

It should be noted that combinations of the various components illustrated in FIGS. 1-4 can be combined, for example, the adiabatic tapering on the input side illustrated in FIG. 2 with the adiabatic tapering on the output side illustrated in FIG. 4. One of ordinary skill in the art would recognize many variations, modifications, and alternatives.

In some fiber coupling designs, the beam profile of the diode lasers, which is generally rectangular with high beam quality and large divergence in one direction (transverse) and poor beam quality and low divergence in a second direction (lateral), is not well matched to the optical fiber. As a result of packaging bends and inhomogeneities, the beam expands to fill the 2D fiber etendue (width x divergence). As a result, conventional fiber-coupled diodes can have brightness that is significantly less than the brightness of the source diode.

FIG. 5 is a simplified schematic diagram of a fiber coupling geometry according to an embodiment of the present invention. As illustrated in FIG. 5, the diode laser 515 provides an output profile 530 that generates a laser beam with a widely diverging beam in one direction (transverse) and a low divergence beam in a second direction (lateral). The optical coupler 504 couples the laser beam into a fiber 508 that includes an outer cladding 508a and an inner core 508b at which the laser beam has an input profile 532. Thus, fiber 508 independently matches the diode pump etendue in each direction. This configuration can be particularly useful for single emitter diodes (e.g., less than 20 W). It should be noted that this configuration provides benefits also available using the smaller core and round core MMFs described herein. In some embodiments, the area of the input profile 532 is less than the area of the output profile 530, thereby increasing the intensity in the fiber 508 and, thereby, increasing the Raman conversion efficiency.

It should be noted that although FIG. 5 illustrates a single diode laser 515, this is not required by the present invention and the single diode laser 515 can be replaced by a diode laser array, an array of pump delivery fibers, or the like. The embodiment illustrated in FIG. 5 provides an architecture in which the two-dimensional beam cross section of the light in fiber 508 is less than the two-dimensional beam cross section at output profile 530, thereby producing an intensity in the fiber 508 that is greater than or equal to the intensity at output profile 530.

In an embodiment, the asymmetric beam profile of output profile 530 illustrated in FIG. 5 can include a rectangular profile with rounded corners and the asymmetric core of fiber 508 can include a rectangular core with rounded corners. As another example, the asymmetric beam profile of output profile 530 can include an elliptical profile and the asymmetric core of fiber 508 can include an elliptical core.

According to an embodiment of the present invention, a multimode optical fiber Raman laser includes a pump source operable to emit a beam of radiation centered at a pump wavelength, an input coupler optically aligned with the pump source, and a multimode optical fiber operable as an optical resonator resonant at an emission wavelength that is greater than the pump wavelength. In a particular embodiment, the multimode optical fiber has a core diameter less than about 100 µm and a numerical aperture greater than about 0.2, although these values are not required by the present invention and in implementations using higher power pumps (e.g., using a fiber with a 200 µm core, the multimode optical fiber could have a 10 µm core with a NA increased by a factor of two). One of ordinary skill in the art would recognize many variations, modifications, and alternatives.

The multimode optical fiber includes an input section optically aligned with the input coupler and including a first fiber Bragg grating characterized by a first predetermined reflectance at the emission wavelength and an intracavity section of predetermined length. The intracavity section is subjected to a stimulated Raman scattering (SRS) process in the presence of the radiation emitted by the pump source at the pump wavelength, thereby enabling power generation at the emission wavelength. The laser also includes an output section including a second fiber Bragg grating characterized by a second predetermined reflectance at the emission wavelength and an output coupler optically aligned with the output section of the multimode optical fiber and configured to provide a laser output at the emission wavelength.

In an embodiment, the input coupler includes a focusing element configured to couple the radiation emitted by the pump source into the input section of the multimode optical fiber. The input coupler can include a delivery fiber coupled to an output of the pump source. The delivery fiber can have a core diameter that is greater than the core diameter of the multimode optical fiber. The input coupler can also include a tapered optical fiber having an input end coupled to the delivery fiber, and an output end coupled to the input section of the multimode optical fiber. The tapered optical fiber is configured to adiabatically transmit the radiation emitted by the pump source from the delivery fiber to the multimode optical fiber.

The output section of the multimode optical fiber further includes a third fiber Bragg grating characterized by a third predetermined reflectance at the pump wavelength. The multimode optical fiber can include at least one of polymer clad silica fiber, silica photonic crystal fiber, multi-component silicate fiber, or multi-component phosphate fiber. The pump source is a semiconductor diode laser in some implementations or an array of semiconductor diode lasers in another implementation.

According to another embodiment of the present invention, the laser includes a pump source operable to emit a beam of radiation centered at a pump wavelength, an input coupler optically aligned with the pump source, and a first optical fiber operable as an optical resonator resonant at an emission wavelength that is greater than the pump wavelength. The laser also includes an input section optically aligned with the input coupler and having a first core diameter. The input section includes a first fiber Bragg grating characterized by a first predetermined reflectance at the emission wavelength. The laser further includes an intracavity section of predetermined length optically coupled to the input section and having a core diameter that is substantially equal to the first core diameter, wherein the intracavity section is subjected to a stimulated Raman scattering (SRS) process in the presence of the radiation emitted by the pump source at the pump wavelength, thereby enabling power generation at the emission wavelength and an output section including a first subsection, a second subsection, and a third subsection. The first subsection is optically coupled to the intracavity section and has a core diameter that is substantially equal to the first core diameter, and the first subsection includes a second fiber Bragg grating characterized by a second predetermined reflectance at the pump wavelength in an embodiment. The third subsection has a second core diameter that is less than the first core diameter and includes a third fiber Bragg grating characterized by a third predetermined reflectance at the emission wavelength in an embodiment. The second subsection has a tapered core diameter configured to adiabatically transmit radiation at the emission wavelength from the first subsection to the third subsection in an embodiment. The laser also includes an output coupler optically coupled to the output section of the first optical fiber and configured to provide a laser output at the emission wavelength.

The third subsection of the output section of the first optical fiber can comprise a single-mode fiber. The input coupler can include a focusing element configured to couple the radiation emitted by the pump source into the input section of the first optical fiber. The input coupler can include a second optical fiber coupled to an output of the pump source, wherein the second optical fiber has a core diameter that is greater than the first core diameter. The third optical fiber is coupled to the second optical fiber at one end and the input section of the first optical fiber at an opposite end, wherein the third optical fiber has a tapered core diameter configured to adiabatically transmit radiation emitted by the pump source from the second optical fiber to the input section of the first optical fiber.

As examples, the input section of the first optical fiber can have a numerical aperture greater than about 0.4, and the first core diameter of the input section can be less than about 30 microns. The second optical fiber can have a numerical aperture less than about 0.3, and the core diameter of the second optical fiber can be greater than about 40 microns. Each of the input section and the intracavity section of the first optical fiber can include one of polymer clad silica fiber, silica photonic crystal fiber, multi-component silicate fiber, or multi-component phosphate fiber. The pump source can include a semiconductor diode laser or an array of semiconductor diode lasers.

According to a specific embodiment of the present invention, the laser includes a pump source operable to emit a beam of radiation centered at a pump wavelength, wherein the beam emitted by the pump source has a first etendue in a first direction and a second etendue in a second direction substantially orthogonal to the first direction, the first etendue being different from the second etendue. The laser also includes an input coupler optically aligned with the pump source and an optical fiber operable as an optical resonator resonant at an emission wavelength that is greater than the pump wavelength. The optical fiber is characterized by a third etendue in the first direction and a fourth etendue in the second direction, the third etendue of the optical fiber substantially matching the first etendue of the beam emitted by the pump source, the fourth etendue of the optical fiber substantially matching the second etendue of the beam emitted by the pump source. The optical fiber includes an input section optically aligned with the input coupler and including a first fiber Bragg grating characterized by a first predetermined reflectance at the emission wavelength, an intracavity section of predetermined length, wherein the intracavity section is subjected to a stimulated Raman scattering (SRS) process in the presence of the radiation emitted by the pump source at the pump wavelength, thereby enabling power generation at the emission wavelength, an output section including a second fiber Bragg grating characterized by a second predetermined reflectance at the emission wavelength, and an output coupler optically aligned with the output section of the optical fiber and configured to provide a laser output at the emission wavelength.

The input coupler can include a focusing element configured to couple the radiation emitted by the pump source into the input section of the optical fiber. The pump source can include a semiconductor diode laser. The output section of the optical fiber further includes a third fiber Bragg grating characterized by a third predetermined reflectance at the pump wavelength.

It is also understood that the examples and embodiments described herein are for illustrative purposes only and that various modifications or changes in light thereof will be suggested to persons skilled in the art. The invention is defined by the scope of the appended claims.

## Claims

1. A multimode fiber Raman laser comprising:
a pump source; and
a multimode Raman resonator fiber (308) coupled to the pump source;
wherein
the pump source has an emission area and a first etendue and the multimode Raman resonator fiber (308) has a second etendue greater than or
equal to the first etendue, wherein the multimode Raman resonator fiber includes:
a Stokes high reflectivity, HR, fiber Bragg grating, FBG; a Stokes output coupler, OC, FBG, wherein the Stokes HR FBG (306) and the Stokes OC FBG (312) define a resonant cavity that is resonant at a Stokes wavelength;
a pump HR FBG (310) disposed between the Stokes HR FBG and the Stokes OC FBG,
wherein the pump HR FBG is reflective at a pump wavelength; and
an adiabatically tapered mode converter (320) disposed between the pump HR FBG and the Stokes OC FBG.

2. The multimode fiber Raman laser of claim 1 wherein the pump source comprises a pump delivery fiber (101) having a first core diameter substantially equal to the emission area and the multimode Raman resonator fiber (308) has a second core diameter less than the first core diameter.

3. The multimode fiber Raman laser of claim 2, further comprising an optical coupler (104) disposed between the pump delivery fiber (101) and the multimode Raman resonator fiber (308).

4. The multimode fiber Raman laser of claim 3, wherein the optical coupler (101) comprises an adiabatic tapered fiber.

5. The multimode fiber Raman laser of claim 2, further comprising:
a plurality of pump sources, each of the plurality of pump sources being coupled to one of a plurality of pump fibers, wherein each of the plurality of pump fibers has a smaller core than the first core diameter and an etendue greater than or equal to each of the pump sources; and
a fused fiber pump combiner module coupled to each of the plurality of pump fibers and to the pump delivery fiber.

6. The multimode fiber Raman laser of claim 2, wherein the pump delivery fiber has an NA larger than 0.12.

7. The multimode fiber Raman laser of claim 2, wherein the pump delivery fiber has an NA larger than 0.20.

8. The multimode fiber Raman laser of claim 1 wherein the multimode Raman resonator fiber comprises a germanosilicate fiber.

9. The multimode fiber Raman laser of claim 1, wherein the adiabatic tapered mode converter (320; 420) is disposed in an unpumped region.

10. The multimode fiber Raman laser of claim 9, wherein the adiabatically tapered mode converter (320; 420) supports a reduced number of modes less than or equal to a number of modes supported by the multimode Raman resonator fiber.

## Patentansprüche

1. Multimodenfaser-Raman-Laser mit:
einer Pumpquelle; und
einer an die Pumpquelle gekoppelten Multimoden-Raman-Resonator-Faser (308);
wobei
die Pumpquelle eine Emissionsfläche und ein erstes Etendue aufweist, und
die Multimoden-Raman-Resonator-Faser (308) ein zweites Etendue aufweist, das größer als oder gleich groß wie des erste Etendue ist, wobei die Multimoden-Raman-Resonator-Faser beinhaltet:
ein Stokes-Hochreflektivitäts-, HR, Faser-Bragg-Gitter, FBG;
ein Stokes-Ausgangskoppler-, OC, FBG, wobei das Stokes-HR-FBG (306) und das Stokes-OC-FBG (312) eine Resonanz-Cavity begrenzen, die bei einer Stokes-Wellenlänge resonant ist;
ein zwischen dem Stokes-HR-FBG und dem Stokes-OC-FBG angeordnetes Pump-HR-FBG (310), wobei das Pump-HR-FBG bei einer Pumpwellenlänge reflektiv ist; und
einen zwischen dem Pump-HR-FBG und dem Stokes-OC-FBG angeordneten adiabatisch verjüngten Modenwandler (320).

2. Multimodenfaser-Raman-Laser nach Anspruch 1, wobei die Pumpquelle eine Pump-Liefer-Faser (101) mit einem ersten Kerndurchmesser im Wesentlichen gleich der Emissionsfläche aufweist und die Multimoden-Raman-Resonator-Faser (308) einen zweiten Kerndurchmesser aufweist, der kleiner als der erste Kerndurchmesser ist.

3. Multimodenfaser-Raman-Laser nach Anspruch 2, ferner aufweisend einen zwischen der Pump-Liefer-Faser (101) und der Multimoden-Raman-Resonator-Faser (308) angeordneten optischen Koppler (104).

4. Multimodenfaser-Raman-Laser nach Anspruch 3, wobei der optische Koppler (101) eine adiabatisch verjüngte Faser aufweist.

5. Multimodenfaser-Raman-Laser nach Anspruch 2, ferner aufweisend:
mehrere Pumpquellen, wobei jede der mehreren Pumpquellen an eine der mehreren Pumpfasern gekoppelt ist, wobei jede der mehreren Pumpfasern einen kleineren Kern als der erste Kerndurchmesser und ein größeres oder gleichgroßes Etendue aufweist wie jede der Pumpquellen; und
ein Fusionsfaser-Pump-Kombinierer-Modul, das an jede der mehreren Pumpfasern und an die Pump-Liefer-Faser gekoppelt ist.

6. Multimodenfaser-Raman-Laser nach Anspruch 2, wobei die Pump-Liefer-Faser eine NA von größer als 0,12 aufweist.

7. Multimodenfaser-Raman-Laser nach Anspruch 2, wobei die Pump-Liefer-Faser eine NA von größer als 0.20 aufweist.

8. Multimodenfaser-Raman-Laser nach Anspruch 1, wobei die Multimoden-Raman-Resonator-Faser eine Germanosilikat-Faser aufweist.

9. Multimodenfaser-Raman-Laser nach Anspruch 1, wobei der adiabatisch verjüngte Modenwandler (320; 420) in einer ungepumpten Region angeordnet ist.

10. Multimodenfaser-Raman-Laser nach Anspruch 9, wobei der adiabatisch verjüngte Modenwandler (320; 420) eine verringerte Anzahl an Moden unterstützt, die kleiner als oder gleichgroß ist wie eine Anzahl von Moden, die von der Multimoden-Raman-Resonator-Faser unterstützt wird.

## Revendications

1. Un laser Raman à fibre multimode comprenant :
une source de pompage ; et
une fibre résonateur Raman multimode (308) couplée à la source de pompage ;
dans lequel
la source de pompage a une zone d'émission et une première étendue et la fibre du résonateur Raman multimode (108) a une seconde étendue.
et la fibre de résonateur Raman multimode (308) a une deuxième étendue supérieure ou égale à la première étendue, dans lequel la fibre de résonateur Raman multimode comprend :
un réseau de Bragg de fibre, FBG, à haute réflectivité, HR, de Stokes ;
un coupleur de sortie de Stokes, OC, FBG, dans lequel le HR FBG de Stokes (306) et le OC FBG de Stokes (312) définissent une cavité résonante qui est résonante à une longueur d'onde de Stokes ;
un HR FBG de pompe (310) disposé entre le HR FBG de Stokes et le OC FBG de Stokes, dans lequel le HR FBG de pompe est réfléchissant à une longueur d'onde de pompe ; et
un convertisseur de mode adiabatiquement effilé (320) disposé entre le HR FBG de pompage et le OC FBG de Stokes.

2. Laser Raman à fibre multimode de la revendication 1, dans lequel la source de pompage comprend une fibre d'alimentation de pompage (101) ayant un premier diamètre de noyau sensiblement égal à la zone d'émission et la fibre de résonateur Raman multimode (308) a un second diamètre de noyau inférieur au premier diamètre de noyau.

3. Le laser Raman à fibre multimode de la revendication 2, comprenant en outre un coupleur optique (104) disposé entre la fibre d'alimentation de pompe (101) et la fibre de résonateur Raman multimode (308).

4. Le laser Raman à fibre multimode de la revendication 3, dans lequel le coupleur optique (101) comprend une fibre conique adiabatique.

5. Le laser Raman à fibre multimode de la revendication 2, comprenant en outre :
une pluralité de sources de pompage, chacune de la pluralité de sources de pompage étant couplée à une d'une pluralité de fibres de pompage, dans laquelle chacune de la pluralité de fibres de pompage a un noyau plus petit que le premier diamètre de noyau et une étendue supérieure ou égale à chacune des sources de pompage ; et
un module de combinaison de pompe à fibres fusionnées couplé à chacune de la pluralité de fibres de pompage et à la fibre d'alimentation de la pompe.

6. Le laser Raman à fibre multimode de la revendication 2, dans lequel la fibre d'alimentation de la pompe a une NA supérieure à 0,12.

7. Le laser Raman à fibre multimode de la revendication 2, dans lequel la fibre de distribution de la pompe a une NA supérieure à 0,20.

8. Laser Raman à fibre multimode de la revendication 1, dans lequel la fibre du résonateur Raman multimode comprend une fibre de germanosilicate.

9. Le laser Raman à fibre multimode de la revendication 1, dans lequel le convertisseur de mode conique adiabatique (320 ; 420) est disposé dans une région non pompée.

10. Le laser Raman à fibre multimode de la revendication 9, dans lequel le convertisseur de mode effilé adiabatique (320 ; 420) supporte un nombre réduit de modes inférieur ou égal à un nombre de modes supportés par la fibre de résonateur Raman multimode.
